# EUROPEAN PATENT APPLICATION

(11) **EP 4 776 091 A2**
(43) Date of publication of application: **15.07.2026**
(21) Application number: 25226235.7
(22) Date of filing: 22.12.2025
(51) Int. Cl.: G05D 1/225, G05D 1/435, G05D 1/622, G05D 1/85

(54) **CONTROL SYSTEM**

(30) Priority: 08.01.2025 JP 2025002752
(71) Applicant: Toyota Jidosha Kabushiki Kaisha, Toyota-shi, Aichi-ken 471-8571 (JP)
(72) Inventor: UEDA, Kazuhiko, Toyota-shi, Aichi-ken, 471-8571 (JP)
(74) Representative: TBK

(57) **Abstract**

A control system that controls a moving object movable in a factory by unmanned driving comprises: a controller that moves the moving object backward by the unmanned driving in a specific condition corresponding to at least one of a case where the moving object is unable to move forward while the moving object is under a schedule of moving forward and a case where the moving object moving forward is unable to stop while the moving object is under a schedule of stopping; and a memory storing a program to be executed by the controller.

## Description

### BACKGROUND

### FIELD

The present disclosure relates to a control system.

### RELATED ART

There is a technique conventionally known by which a vehicle is caused to run by unmanned driving in a factory where the vehicle is manufactured (Japanese Patent Application Publication (Translation of PCT Application) No. 2017-538619).

Depending on the state of a vehicle or an environment around the vehicle, the vehicle becomes unable to move forward while the vehicle is under a schedule of moving forward. In this case, putting the vehicle on standby while keeping a running system of the vehicle in operation consumes fuel or electricity also during the standby. This may cause a situation such as lack of the fuel or reduction in the charging rate of a battery during the standby to make it impossible to move the vehicle to a different place. Hence, the vehicle may become immovable on site. Making the vehicle become immovable might cause a problem that manpower or equipment for adding the fuel or charging the battery is required or the vehicle having become immovable hinders running of a different vehicle. Thus, it is preferable to move the vehicle to an arbitrary place by moving the vehicle backward before running out of the fuel or reduction in the charging rate of the battery occurs. Furthermore, depending on the state of the vehicle or an environment around the vehicle, the vehicle moving forward becomes unable to stop while the vehicle is under a schedule of stopping. If the vehicle continues to run in this case, a risk of contact of the vehicle with another object is caused. These problems occur not only in the case of vehicles but are common to other moving objects.

### SUMMARY

The present disclosure is feasible in the following aspects.
(1) According to one aspect of the present disclosure, a control system is provided. The control system that controls a moving object movable in a factory by unmanned driving comprises: a controller that moves the moving object backward by the unmanned driving in a specific condition corresponding to at least one of a case where the moving object is unable to move forward while the moving object is under a schedule of moving forward and a case where the moving object moving forward is unable to stop while the moving object is under a schedule of stopping; and a memory storing a program to be executed by the controller. According to this aspect, the control system is capable of moving the moving object to an arbitrary place by moving the moving object backward under the schedule of moving forward without putting the moving object on standby while keeping a system for moving the moving object in operation. This makes it possible to reduce a probability that the moving object will become immovable due to running out of fuel or reduction in the charging rate of a battery during standby. As a result, it becomes possible to reduce the occurrence of a problem that manpower or equipment for adding the fuel or charging the battery is required to restore the moving object to a movable state, or the moving object having become immovable hinders moving of a different moving object. According to this aspect, the control system causes the moving object to repeatedly make the motions of moving forward and moving backward by a predetermined distance under the schedule of stopping to cancel the moving distance of the moving object in a direction of the forward movement and the moving distance of the moving object in a direction of the backward movement, thereby allowing the moving object to stay on site. As a result, if the moving object continues moving and a different object is present at the end of the moving, it is possible to avoid contact of the moving object with the different object.
(2) In the above aspect, the control system may further comprise: an acquisition unit that acquires state information indicating a state of the control system; and an output unit. If it is determined by using the state information that abnormality has occurred at the function of the control system under at least one of the schedule of moving forward and the schedule of stopping, the output unit outputs specific information to the controller. The specific information indicates that the specific condition applies. The controller may move the moving object backward by the unmanned driving if the specific information is acquired. According to this aspect, if the moving object is unable to move forward under the schedule of moving forward due to the occurrence of abnormality at the function the control system, the control system is capable of moving the moving object to an arbitrary place by moving the moving object backward. According to this aspect, if the moving object moving forward is unable to stop under the schedule of stopping due to the occurrence of abnormality at the function of the control system, the control system is capable of causing the moving object to stay on site by causing the moving object to repeatedly make the motions of moving forward and moving backward.
(3) In the above aspect, the control system may further comprise: an acquisition unit that acquires environmental information indicating an environment around the moving object; and an output unit. If it is determined by using the environmental information that an obstacle is present at a destination of forward movement of the moving object under the schedule of moving forward, the output unit outputs specific information to the controller. The specific information indicates that the specific condition applies. The controller may move the moving object backward by the unmanned driving if the specific information is acquired. According to this aspect, if it is determined that an obstacle is present at a destination of forward movement of the moving object under the schedule of moving forward, the control system is capable of moving the moving object to an arbitrary place by moving the moving object backward.
(4) In the above aspect, the acquisition unit may further acquire road information about a road on which the moving object is to move. The road information includes at least one of the number of vehicular lanes formed on the road, the width of the vehicular lane, the shape of the road, the gradient of the road, and a frictional force between a drive wheel of the moving object and a road surface of the road. If it is determined by further using the road information that the moving object is unable to make at least one of direction change, route change, and stop, the output unit may output the specific information to the controller. According to this aspect, if it is determined that an obstacle is present at a destination of forward movement of the moving object under the schedule of moving forward and if the moving object is unable to make at least one of direction change, route change, and stop to make the moving object unable to move forward, the control system is capable of moving the moving object to an arbitrary place by moving the moving object backward.
(5) In the above aspect, the control system may further comprise: an acquisition unit that acquires road information and remaining amount information, the road information being information about a road on which the moving object is to move and including the gradient of the road, the remaining amount information indicating the remaining amount of a drive power source of the moving object; and an output unit. If it is determined by using the road information that the moving object is required to climb the road having the gradient equal to or greater than a predetermined first threshold under the schedule of moving forward and if the remaining amount specified by using the remaining amount information is less than a predetermined second threshold, the output unit outputs specific information to the controller. The specific information indicates that the specific condition applies. The controller may move the moving object backward by the unmanned driving if the specific information is acquired. According to this aspect, if the moving object under the schedule of moving forward is required to climb the road having the gradient equal to or greater than the first threshold and if the remaining amount of the drive power source of the moving object being less than the second threshold makes the moving object unable to move forward, the control system is capable of moving the moving object to an arbitrary place by moving the moving object backward.

The present disclosure is feasible in various aspects other than the control system described above. For example, the present disclosure may be realized in aspects including a moving object and a server capable of realizing at least some of the functions of the control system, a control method of controlling the moving object using the control system, a computer program to realize the control method, and a non-transitory recording medium in which the computer program is recorded.

### BRIEF DESCRIPTION OF THE DRAWINGS

Fig. 1 is a conceptual view showing the configuration of a control system;
Fig. 2 is a block diagram showing the configuration of the control system;
Fig. 3 is a flowchart showing a processing procedure of running control over a vehicle according to a first embodiment;
Fig. 4 is a flowchart showing a method of controlling the vehicle according to the first embodiment;
Fig. 5 is a flowchart showing a method of controlling a vehicle according to a second embodiment;
Fig. 6 is a flowchart showing a method of controlling a vehicle according to a third embodiment;
Fig. 7 is an explanatory view showing a schematic configuration of a control system according to a fourth embodiment; and
Fig. 8 is a flowchart showing a processing procedure of running control over a vehicle according to the fourth embodiment.

### DETAILED DESCRIPTION

### A. First Embodiment:

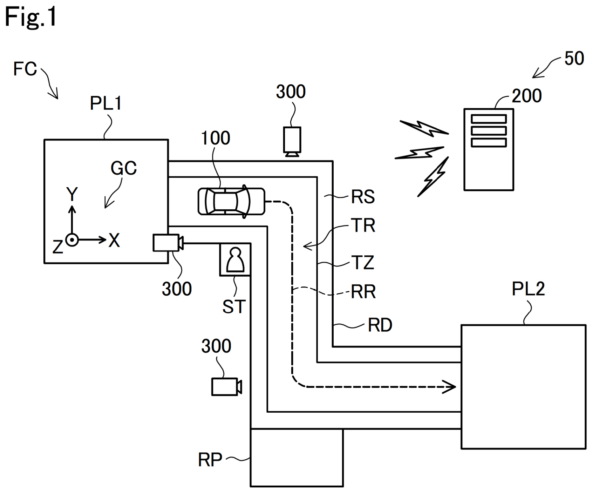

Fig. 1 is a conceptual view showing the configuration of a control system 50. The control system 50 includes one or more vehicles 100 as moving objects, a server 200, and one or more external sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the control system 50 is used in a factory FC where the vehicle 100 is manufactured. A reference coordinate system in the factory FC is a global coordinate system GC, and an arbitrary position in the factory FC may be expressed using X, Y, and Z coordinates according to the global coordinate system GC. The factory FC has a first place PL1 and a second place PL2. The first place PL1 and the second place PL2 are connected to each other via a track TR along which the vehicle 100 is capable of running. The track TR is defined by a vehicular lane TZ formed on a road RD connecting the first place PL1 and the second place PL2 to each other. The factory FC is installed with a plurality of the external sensors 300 arranged along the track TR. The position of each external sensor 300 in the factory FC is adjusted in advance. The vehicle 100 moves by unmanned driving from the first place PL1 to the second place PL2 along the track TR. The factory FC may include a storage area such as a yard for storage of the vehicle 100.

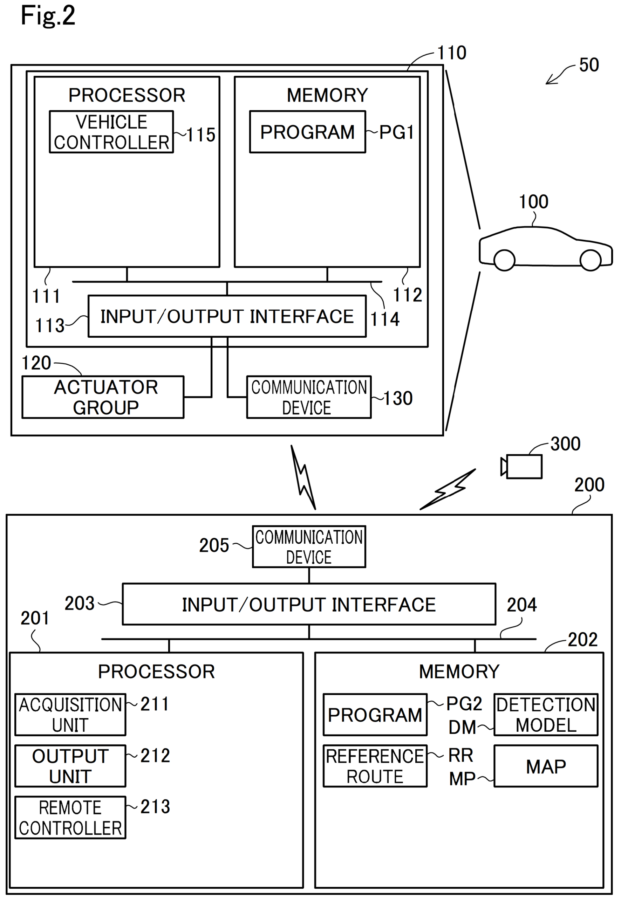

Fig. 2 is a block diagram showing the configuration of the control system 50. The vehicle 100 includes a vehicle control device 110 for controlling each part of the vehicle 100, an actuator group 120 including one or more actuators to be driven under control from the vehicle control device 110, and a communication device 130 for communicating with an external device such as the server 200 via radio communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 is configured using a computer including a processor 111, a memory 112, an input/output interface 113, and an internal bus 114. The processor 111, the memory 112, and the input/output interface 113 are connected via the internal bus 114 in a manner allowing bidirectional communication therebetween. The actuator group 120 and the communication device 130 are connected to the input/output interface 113. The processor 111 executes a program PG1 stored in the memory 112 to function as a vehicle controller 115.

The vehicle controller 115 causes the vehicle 100 to run by controlling the actuator group 120. The vehicle controller 115 causes the vehicle 100 to run by controlling the actuator group 120 using a running control signal received from the server 200. The running control signal is a control signal for causing the vehicle 100 to run. In the present embodiment, the running control signal includes an acceleration and a rudder angle of the vehicle 100 as parameters. In other embodiments, the running control signal may include a speed of the vehicle 100 as a parameter in addition to or instead of an acceleration of the vehicle 100. The running control signal may include a parameter for changing the shift position of the vehicle 100 by controlling an actuator of a transmission belonging to the actuator group 120 instead of or in addition to an acceleration, a speed, or a rudder angle of the vehicle 100.

The server 200 is configured using a computer including a processor 201, a memory 202, an input/output interface 203, and an internal bus 204. The processor 201, the memory 202, and the input/output interface 203 are connected via the internal bus 204 in a manner allowing bidirectional communication therebetween. A communication device 205 for communicating with each type of device external to the server 200 is connected to the input/output interface 203. The communication device 205 is capable of communicating with the vehicle 100 via radio communication and capable of communicating with each external sensor 300 via wired communication or radio communication. The processor 201 executes a program PG2 stored in the memory 202 to function as an acquisition unit 211, an output unit 212, and a remote controller 213.

The acquisition unit 211 acquires state information indicating respective states of the parts of the control system 50. The state information includes information indicating a driving state of a device such as a transmission, for example. In this case, the acquisition unit 211 acquires the state information using communication inside the vehicle 100 such as controller area network (CAN) communication, for example. The state information may include information indicating an appearance state of the vehicle 100 such as a broken state of a windshield. In this case, the acquisition unit 211 acquires the state information using detection result from the external sensor 300, for example. The state information may also include information indicating an error state of an external device such as the server 200 different from the vehicle 100. In this case, the acquisition unit 211 acquires the state information using communication between the vehicle 100 and the server 200, for example.

If it is determined by using the state information that abnormality has occurred at the function of at least one of the parts of the control system 50 under the schedule of moving forward, the output unit 212 outputs specific information to the remote controller 213. The specific information is information indicating that a specific condition applies. A case where the specific condition applies means a case where the vehicle 100 is unable to move forward while the vehicle 100 is under the schedule of moving forward, for example. The schedule of moving forward means a case where a running control signal for moving the vehicle 100 forward is generated or a case where a running control signal for moving the vehicle 100 forward is scheduled to be generated, for example.

As an example, if it is impossible to set the shift position of the vehicle 100 to a drive range (hereinafter called a D range) due to abnormality at the transmission while it is possible to set the shift position to a reverse range (hereinafter called an R range), the following situation might occur. In this case, while it may be possible to set the shift position of the vehicle 100 to the R range and move the vehicle 100 backward, it may be impossible to set the shift position of the vehicle 100 to the D range and move the vehicle 100 forward. In response to this, if a driving state of the transmission specified by using the state information is such that setting to the D range is impossible while setting to the R range is possible, the output unit 212 outputs the specific information. If the windshield is broken so a surrounding of the vehicle 100 is unrecognizable using a front camera mounted in a vehicle interior, for example, the following situation might occur. In this case, while it may be possible to move the vehicle 100 backward using a rear camera mounted on the rear of the vehicle 100, it may be impossible to move the vehicle 100 forward using the front camera. In response to this, if an appearance state of the windshield specified by using the state information is a broken state, the output unit 212 outputs the specific information. As described above, if it is determined by using the state information that abnormality has occurred at the running function of the vehicle 100 due to failure of the vehicle 100 under the schedule of moving forward, the output unit 212 outputs the specific information.

As another example, if it is impossible to generate a running control signal for moving the vehicle 100 forward due to error at the server 200 while it is possible to generate a running control signal for moving the vehicle 100 backward, the following situation might occur. In this case, it is possible to move the vehicle 100 backward by causing the server 200 to generate a running control signal for moving the vehicle 100 backward and to transmit the running control signal to the vehicle 100. On the other hand, as it is impossible for the server 200 to generate a control signal for moving the vehicle 100 forward, it might be impossible to move the vehicle 100 forward. In response to this, if a driving state of the server 200 specified by using the state information is an error state, the output unit 212 outputs the specific information. As described above, if it is determined by using the state information that abnormality has occurred at the function of an external device involved in unmanned driving due to failure of the external device under the schedule of moving forward, the output unit 212 outputs the specific information.

If none of the running function of the vehicle 100 and the function of the external device has a problem and the vehicle 100 is movable forward and backward from the viewpoint of function, the output unit 212 may output the specific information in the following case. If the windshield is broken and if the vehicle 100 is to run by unmanned driving using detection result from the external sensor 300 without using detection result from a vehicle-mounted camera, for example, the vehicle 100 is movable forward and backward. However, in order to guarantee the quality of the vehicle 100, it is preferable for the vehicle 100 to restart running after being repaired. In this regard, if an appearance state of the windshield specified by using the state information is a broken state, the output unit 212 may output the specific information. As described above, if it is determined by using the state information that abnormality has occurred at the appearance state of the vehicle 100 due to the break of the vehicle 100 under the schedule of moving forward, the output unit 212 may output the specific information. Specifically, the output unit 212 may output the specific information if it is unfavorable to move the vehicle 100 forward according to rules or a socially accepted idea.

The remote controller 213 acquires detection result from the sensor, generates a running control signal for controlling the actuator group 120 of the vehicle 100 using the detection result, and transmits the running control signal to the vehicle 100, thereby causing the vehicle 100 to run by remote control. In doing this, the remote controller 213 moves the vehicle 100 backward (back) by unmanned driving in the specific condition. In the present embodiment, if the specific information is acquired, the remote controller 213 generates a running control signal for setting the shift position of the vehicle 100 to the R range and moving the vehicle 100 backward, and transmits the generated running control signal to the vehicle 100. By doing so, the remote controller 213 moves the vehicle 100 backward by unmanned driving to move the vehicle 100 to an arbitrary place. The arbitrary place is a place where the vehicle 100 is stoppable without hindering running of a different vehicle 100, and is a pull-off such as a road shoulder RS provided at a side of the track TR, for example. The arbitrary place may be a place where space for supplying the vehicle 100 with a drive power source such as fuel or electricity is obtainable around the vehicle 100. The arbitrary place may also be a station ST where a worker is on standby or a repair place RP for repair of the vehicle 100. Information about each place in the factory FC is stored in advance as a map MP in the memory 202 of the server 200, for example. The map MP shows the position of each place in the factory FC in the form of coordinates according to the global coordinate system GC of the factory FC, for example.

The external sensor 300 is a sensor located external to the vehicle 100. In the present embodiment, the external sensor 300 is a sensor that catches the vehicle 100 from outside the vehicle 100. The external sensor 300 includes a communication device (not shown in the drawings), and is capable of communicating with another device such as the server 200 via wired communication or radio communication.

More specifically, the external sensor 300 is configured using a camera. The camera as the external sensor 300 captures an image of the vehicle 100, and outputs the captured image as detection result.

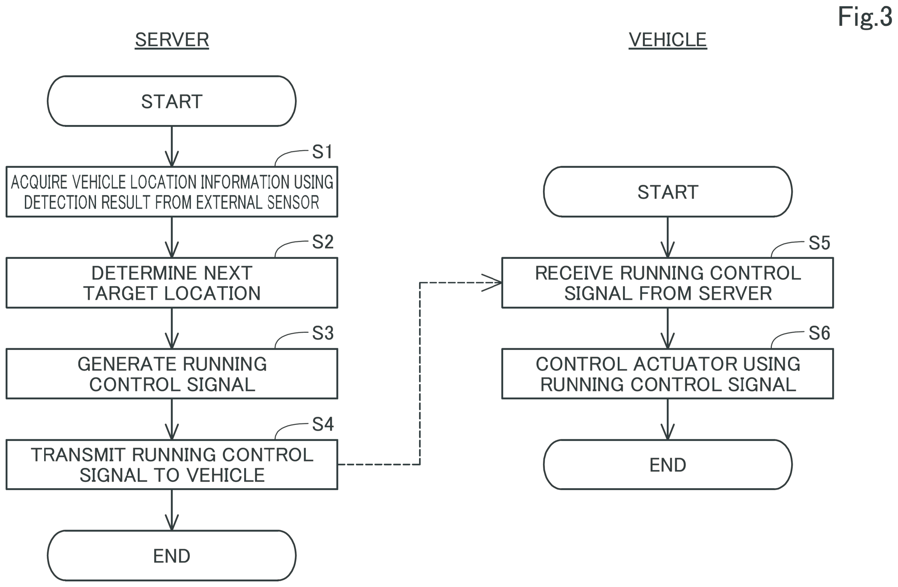

Fig. 3 is a flowchart showing a processing procedure of running control over the vehicle 100 according to the first embodiment.

In step S1, the processor 201 of the server 200 acquires vehicle location information using detection result output from the external sensor 300. The vehicle location information is positional information to be used as a basis for generating a running control signal. In the present embodiment, the vehicle location information includes the position and direction of the vehicle 100 in the global coordinate system GC of the factory FC. More specifically, in step S1, the processor 201 acquires the vehicle location information using a captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the control system 50 or outside the control system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the control system 50 in the present embodiment, it becomes possible to move the vehicle 100 without using a transport unit such as a crane or a conveyor.

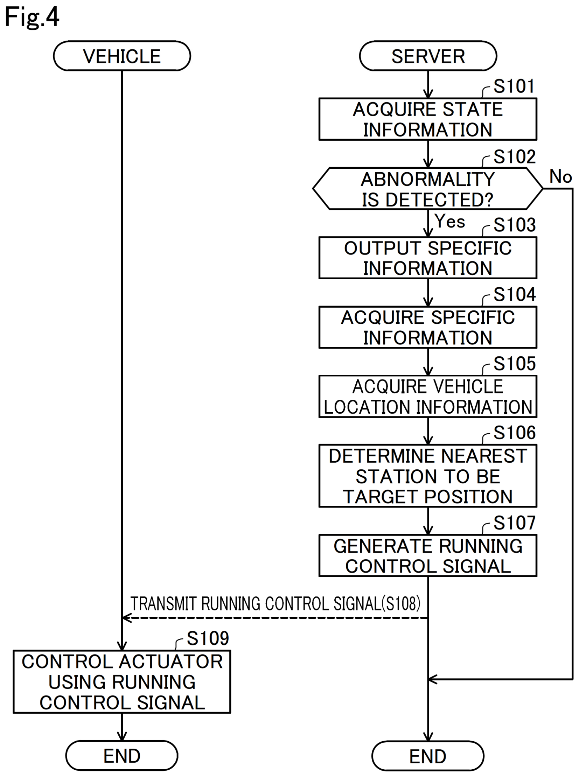

Fig. 4 is a flowchart showing a method of controlling the vehicle 100 according to the first embodiment. In step S101, the acquisition unit 211 acquires the state information. If it is not determined by using the state information that abnormality has occurred at the function of the parts of the control system 50 under the schedule of moving forward (step S102: No), the output unit 212 judges that the specific condition does not apply and finishes the present flow. If it is determined by using the state information that abnormality has occurred at the function of at least one of the parts of the control system 50 under the schedule of moving forward (step S102: Yes), step S103 is performed. In step S103, the output unit 212 judges that the specific condition applies and outputs the specific information to the remote controller 213. By doing so, the remote controller 213 acquires the specific information in step S104. In step S105, the remote controller 213 acquires vehicle location information. In step S106, the remote controller 213 determines the nearest station ST to be a target position using the vehicle location information and the map MP. In step S107, the remote controller 213 generates a running control signal for setting the shift position of the vehicle 100 to the R range and moving the vehicle 100 backward toward the determined target position. In step S108, the remote controller 213 transmits the generated running control signal to the vehicle 100. In step S109, the vehicle controller 115 of the vehicle 100 controls the actuator group 120 using the running control signal transmitted from the server 200. By doing so, the vehicle controller 115 moves the vehicle 100 backward in conformity with the shift position, an acceleration, and a rudder angle included in the running control signal.

According to the above first embodiment, in the specific condition that the vehicle 100 to run by unmanned driving is unable to move forward while the vehicle 100 is under the schedule of moving forward, the control system 50 is capable of moving the vehicle 100 to an arbitrary place by moving the vehicle 100 backward by remote control. In this configuration, it is possible to stop a running system of the vehicle 100 after moving the vehicle 100 to the arbitrary place and then to stop the vehicle 100 without putting the vehicle 100 on standby on site while keeping the running system in operation. This makes it possible to reduce a probability that the vehicle 100 will become immovable on site due to running out of fuel or reduction in the charging rate of a battery during standby. As a result, it becomes possible to reduce the occurrence of a problem that manpower or equipment for adding the fuel or charging the battery is required to restore the vehicle 100 to a state capable of running, or the vehicle 100 having become immovable hinders running of a different vehicle 100.

In particular, if a battery vehicle becomes immovable due to reduction in the charging rate of the battery vehicle and resultant running out of electricity, a battery is required to be charged or required to be changed to a charged battery. In some cases, however, it is impossible to charge the battery sufficiently with a portable fast charger having output of several kilowatts. This may require a power supply vehicle with a charging facility having larger output. Furthermore, time required for charging the battery is generally longer than time required for adding fuel. For this reason, it may take a long time to charge the battery and bring the vehicle 100 to a state capable of running. Moreover, the battery mounted on the battery vehicle is generally heavier than a battery mounted on the vehicle 100 having a different configuration and comparable running performance. This may make it hard for a worker to carry the battery with human power. Furthermore, the battery vehicle is generally heavier than the vehicle 100 having a different configuration and a vehicle body of the substantially same size. For this reason, in order to move the battery vehicle having become immovable by towing the battery vehicle using a tow vehicle, the tow vehicle may be required to be large in size. As described above, if the vehicle 100 having become immovable is the battery vehicle, moving the vehicle 100 having become immovable to a different place may involve higher cost or heavier burden than in a case of the vehicle 100 having a different configuration such as a gasoline vehicle. Thus, moving the vehicle 100 backward before the vehicle 100 becomes immovable in the specific condition is effective, particularly if the "vehicle 100" of the above first embodiment is the "battery vehicle."

According to the above first embodiment, if the vehicle 100 is unable to move forward under the schedule of moving forward due to failure or break of the vehicle 100 or the server 200, the control system 50 is capable of moving the vehicle 100 to an arbitrary place by moving the vehicle 100 backward. Specifically, if the vehicle 100 is unable to move forward under the schedule of moving forward due to the occurrence of abnormality at the function of at least one of the parts of the control system 50, the control system 50 is capable of moving the vehicle 100 to the arbitrary place by moving the vehicle 100 backward.

According to the above first embodiment, the control system 50 is capable of moving the vehicle 100 to a pull-off such as the road shoulder RS where the vehicle 100 is stoppable by moving the vehicle 100 backward before the vehicle 100 becomes immovable. By doing so, it becomes possible to avoid a situation where the vehicle 100 having become immovable will hinder running of a different vehicle 100 or a different vehicle 100 will contact the vehicle 100 having become immovable.

According to the above first embodiment, the control system 50 is capable of moving the vehicle 100 to the station ST by moving the vehicle 100 backward before the vehicle 100 becomes immovable. By doing so, even if the vehicle 100 becomes immovable, it is still possible to cause a worker to move the vehicle 100 to an intended place promptly.

According to the above first embodiment, the control system 50 is capable of moving the vehicle 100 to the repair place RP by moving the vehicle 100 backward before the vehicle 100 becomes immovable. This allows the vehicle 100 to be repaired promptly.

According to the above first embodiment, the factory FC is installed with the plurality of external sensors 300 arranged along the track TR. Thus, even if a surrounding of the vehicle 100 is unrecognizable using detection result from an internal sensor mounted on the vehicle 100, it is still possible for the control system 50 to move the vehicle 100 backward using detection result from the external sensor 300. Even if the vehicle 100 is not mounted with an internal sensor for fulfilling the function of unmanned driving, the control system 50 is still capable of moving the vehicle 100 backward using detection result from the external sensor 300.

### B. Second Embodiment:

If an obstacle is present at a destination of forward movement of the vehicle 100, it may become impossible to change the direction of the vehicle 100 or change a running route of the vehicle 100. The obstacle mentioned herein includes, for example, unevenness on a road surface resulting from bumps and dips, a fallen object, snow deposited as a result of snowfall, flood, a different stopped vehicle such as a disabled vehicle or a construction vehicle, a construction site, and an installed item such as a road cone or a triangular stop display plate. This might cause a situation where the vehicle 100 is unable to move forward while the vehicle 100 is under a schedule of moving forward. In particular, if the vehicular lane TZ or the road shoulder RS is narrow in width or one vehicular lane TZ is provided on the road RD, no space for making a U-turn or a turnabout is provided so the vehicle 100 may be unable to change direction. Furthermore, the absence of a fork in the road RD may make it impossible to change a running route of the vehicle 100. Hence, the above situation is likely to occur if it is impossible to change the direction of the vehicle 100 or change a running route of the vehicle 100.

Moreover, if the gradient of the road RD is steep to such an extent as to make the vehicle 100 unable to stop even if the shift position of the vehicle 100 is set to a parking range or an electric parking brake is actuated, the vehicle 100 may become unable even to stop as well as becoming unable to move forward. If a frictional force between a drive wheel of the vehicle 100 and a road surface is large so the drive wheel is likely to skid in a situation such as running on a snow-covered road or a mud road or running on an iron plate, the vehicle 100 may become unable even to stop as well as becoming unable to move forward.

In this regard, if it is determined that an obstacle is present at a destination of forward movement of the vehicle 100 under the schedule of moving forward and if it is determined that the vehicle 100 is unable to make at least one of direction change, route change, and stop, the control system 50 performs the following process. The control system 50 moves the vehicle 100 backward to move the vehicle 100 to an arbitrary place such as the nearest fork, a place where the gradient of the road RD is smaller, or a place of a better road surface condition.

The acquisition unit 211 acquires environmental information indicating an environment around the vehicle 100. In the present embodiment, the environmental information is detection result from the external sensor 300, namely, a captured image. The environmental information may be a different type of information such as detection result from an internal sensor mounted on a different vehicle 100.

If it is determined that the obstacle is present at the destination of forward movement of the vehicle 100 under the schedule of moving forward, the acquisition unit 211 further acquires road information about the road RD. The road information includes at least one of the number of the vehicular lanes TZ formed on the road RD, the width of the vehicular lane TZ, the shape of the road RD, the gradient of the road RD, and a frictional force between the drive wheel of the vehicle 100 and the road surface of the road RD. The acquisition unit 211 acquires the road information by referring to the map MP stored in the memory 202, for example. The acquisition unit 211 may acquire the road information using the environmental information.

If it is determined by using the environmental information that the obstacle is present at the destination of forward movement of the vehicle 100 under the schedule of moving forward and if it is determined by using the road information that the vehicle 100 is unable to make at least one of direction change, route change, and stop, the output unit 212 outputs the specific information.

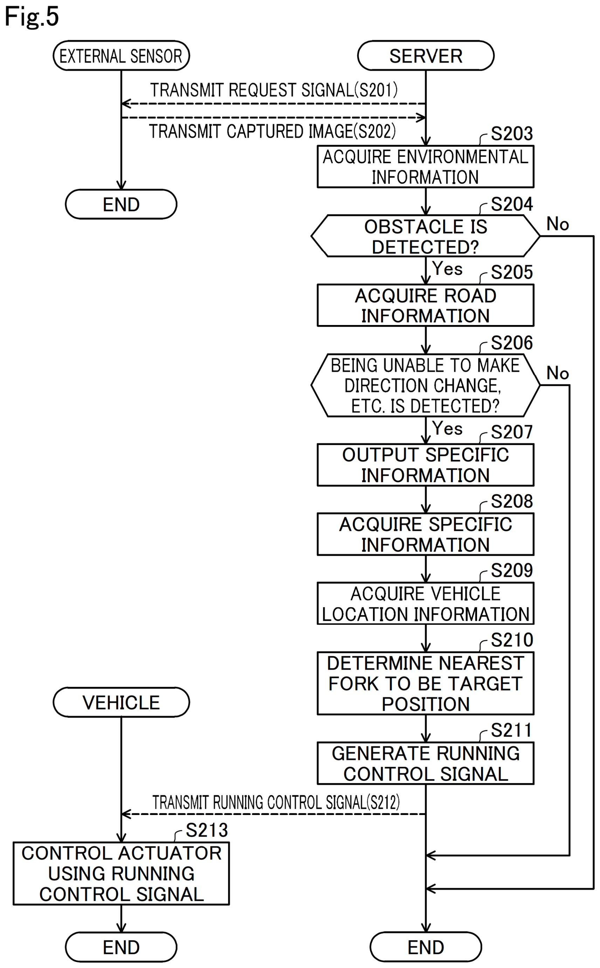

Fig. 5 is a flowchart showing a method of controlling the vehicle 100 according to a second embodiment. In step S201, the acquisition unit 211 transmits a request signal for acquiring a captured image to a camera as the external sensor 300. After receiving the request signal, the external sensor 300 transmits a captured image resulting from imaging of an environment around the vehicle 100 to the server 200 in step S202. By doing so, the acquisition unit 211 acquires the captured image as the environmental information in step S203. If it is not determined by using the environmental information that an obstacle is present at a destination of forward movement of the vehicle 100 under the schedule of moving forward (step S204: No), the output unit 212 judges that the specific condition does not apply and finishes the present flow. If it is determined by using the environmental information that an obstacle is present at the destination of forward movement of the vehicle 100 under the schedule of moving forward (step S204: Yes), step S205 is performed. In step S205, the acquisition unit 211 acquires the road information. If it is determined by using the road information that the vehicle 100 is able to make at least one of direction change, route change, and stop (step S206: No), the specific condition is judged not to apply and the present flow is finished. If it is determined by using the road information that the vehicle 100 is unable to make at least one of direction change, route change, and stop (step S206: Yes), step S207 is performed. In step S207, the output unit 212 judges that the specific condition applies and outputs the specific information to the remote controller 213. By doing so, the remote controller 213 acquires the specific information in step S208. In step S209, the remote controller 213 acquires vehicle location information. In step S210, the remote controller 213 determines the nearest fork to be a target position using the vehicle location information and the map MP. In step S211, the remote controller 213 generates a running control signal for setting the shift position of the vehicle 100 to the R range and moving the vehicle 100 backward toward the determined target position. In step S212, the remote controller 213 transmits the generated running control signal to the vehicle 100. In step S213, the vehicle controller 115 of the vehicle 100 controls the actuator group 120 using the running control signal transmitted from the server 200. By doing so, the vehicle controller 115 moves the vehicle 100 backward in conformity with the shift position, an acceleration, and a rudder angle included in the running control signal.

According to the above second embodiment, if it is determined that an obstacle is present at a destination of forward movement of the vehicle 100 under the schedule of moving forward and if it is determined that the vehicle 100 is unable to make at least one of direction change, route change, and stop, the control system 50 is capable of performing the following. The control system 50 is capable of changing the direction of the vehicle 100 by moving the vehicle 100 backward to a fork in the road RD before the vehicle 100 becomes immovable. This makes it possible to change a running route of the vehicle 100 to allow the vehicle 100 to run toward a destination. If the vehicle 100 is unable to move forward or unable to stop, the control system 50 is capable of stopping the vehicle 100 by moving the vehicle 100 backward and moving the vehicle 100 to a place where the gradient of the road RD is smaller or a place of a better road surface condition.

In particular, in the case of platooning of a plurality of the vehicles 100 running continuously, if a vehicle 100 at the head of the platooning becomes unable to move forward due to an obstacle to stop on site, a subsequent vehicle 100 running behind the vehicle 100 at the head may also become unable to move forward and may be forced to stop. This may cause tip-up of running of the vehicles 100 in the platooning. On the occurrence of the tip-up of running of the vehicles 100, the obstacle is present at a destination of forward movement of the vehicle 100 at the head and the different vehicle 100 is present at a destination of backward movement of the vehicle 100 at the head. This may make the vehicle 100 at the head unable to move either forward or backward. Likewise, a vehicle 100 located between the vehicle 100 at the head and a vehicle 100 on the tail comes to face the different vehicles 100 present both at a destination of forward movement and at a destination of backward movement, so that it may become unable to move either forward or backward. The occurrence of such tip-up of running of the vehicles 100 increases a probability that the vehicles 100 will become immovable on site. Making the plurality of vehicles 100 immovable causes a risk that more manpower or equipment is required for restoring the vehicles 100 to states capable of running or a risk that the vehicles 100 having become immovable will hinder running of a different vehicle 100 for a long time. In response to this, applying the control method of the above second embodiment to the plurality of vehicles 100 allows the vehicles 100 to be moved backward sequentially in order from the vehicle 100 on the tail before the vehicles 100 become immovable. In this configuration, it is possible to reduce a probability that the plurality of vehicles 100 will become immovable on site.

If it is determined that an obstacle is present at a destination of forward movement of the vehicle 100 under the schedule of moving forward without determining whether the vehicle 100 is able to make direction change, route change, or stop by acquiring the road information, the control system 50 may move the vehicle 100 backward. This configuration achieves reduction in processing load during control over the vehicle 100. As a result, it becomes possible to start backward movement of the vehicle 100 earlier. This makes it possible to more reliably reduce a probability that the vehicle 100 will become immovable.

### C. Third Embodiment:

If the remaining amount of the drive power source of the vehicle 100 is poor and if the vehicle 100 is required to make a climb in moving forward, it may be impossible to output a torque required for the climb to make the vehicle 100 unable to completely ascend the road RC having a gradient. Depending on the gradient of the road RD, the vehicle 100 may also become unable even to stop on site. This might cause a situation where the vehicle 100 is unable to move forward while the vehicle 100 is under a schedule of moving forward. In this case, it is also preferable to move the vehicle 100 to an arbitrary place such as a place where the gradient of the road RD is smaller by moving the vehicle 100 backward.

In this regard, if it is determined that the vehicle 100 is required to climb the road RD having a gradient equal to or greater than a predetermined first threshold under the schedule of moving forward and if the remaining amount of the drive power source of the vehicle 100 is less than a predetermined second threshold, the control system 50 performs the following process. The control system 50 moves the vehicle 100 to an arbitrary place by moving the vehicle 100 backward.

The acquisition unit 211 acquires road information including the gradient of the road RD. If it is determined that the vehicle 100 is required to climb the road RD having a gradient equal to or greater than the first threshold under the schedule of moving forward, the acquisition unit 211 further acquires remaining amount information indicating the remaining amount of the drive power source of the vehicle 100. The acquisition unit 211 acquires the remaining amount information using communication inside the vehicle 100, for example.

If it is determined by using the road information that the vehicle 100 is required to climb the road RD having a gradient equal to or greater than the first threshold under the schedule of moving forward and if the remaining amount of the drive power source of the vehicle 100 specified by using the remaining amount information is less than the second threshold, the output unit 212 outputs the specific information.

If the shift position of the vehicle 100 is set to the R range, a transmission gear ratio is generally larger than in a case where the shift position of the vehicle 100 is set to the D range. In this regard, if the specific information is acquired and if a candidate place to which the vehicle 100 is to be moved is present at the end of ascending of the road RD the vehicle 100 is climbing, the remote controller 213 performs the following process. The remote controller 213 generates a running control signal for reversing a traveling direction of the vehicle 100, then setting the shift position of the vehicle 100 to the R range, and moving the vehicle 100 backward, and transmits the generated running control signal to the vehicle 100. By doing so, the remote controller 213 moves the vehicle 100 backward after reversing the traveling direction of the vehicle 100, thereby causing the vehicle 100 to ascend the road RD the vehicle 100 is climbing.

If the shift position of the vehicle 100 is set to a neutral range (hereinafter called an N range) in a period when the vehicle 100 runs on the road RD having a gradient, the weight of the vehicle 100 and the gradient of the road RD make the vehicle 100 move without consuming the drive power source. In this regard, if the specific information is acquired and if the candidate place is present at the end of descending of the road RD the vehicle 100 is climbing, the remote controller 213 performs the following process. The remote controller 213 generates a running control signal for setting the shift position of the vehicle 100 to the N range and moving the vehicle 100 backward, and transmits the generated running control signal to the vehicle 100. By doing so, the remote controller 213 causes the vehicle 100 to descend the road RD the vehicle 100 is climbing using the weight of the vehicle 100 and the gradient of the road RD.

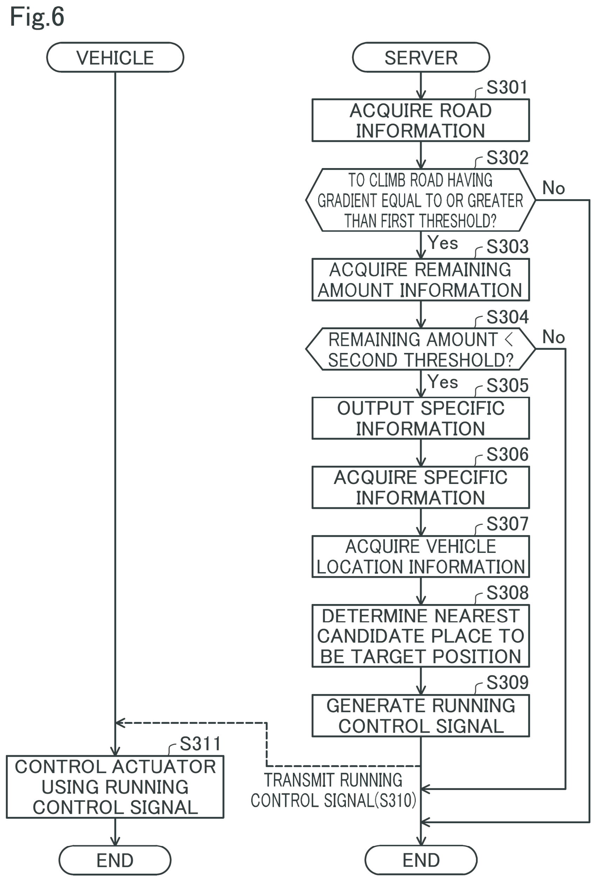

Fig. 6 is a flowchart showing a method of controlling the vehicle 100 according to the third embodiment. In step S301, the acquisition unit 211 acquires the road information including the gradient of the road RD. If it is determined by using the road information that the vehicle 100 is not required to climb the road RD having the gradient equal to or greater than the first threshold under the schedule of moving forward (step S302: No), the output unit 212 judges that the specific condition does not apply and finishes the present flow. If it is determined by using the road information that the vehicle 100 is required to climb the road RD having the gradient equal to or greater than the first threshold under the schedule of moving forward (step S302: Yes), step S303 is performed. In step S303, the acquisition unit 211 acquires the remaining amount information. If the remaining amount of the drive power source of the vehicle 100 specified by using the remaining amount information is equal to or greater than the second threshold (step S304: No), the output unit 212 judges that the specific condition does not apply and finishes the present flow. If the remaining amount of the drive power source of the vehicle 100 specified by using the remaining amount information is less than the second threshold (step S304: Yes), step S305 is performed. In step S305, the output unit 212 judges that the specific condition applies and outputs the specific information to the remote controller 213. By doing so, the remote controller 213 acquires the specific information in step S306. In step S307, the remote controller 213 acquires vehicle location information. In step S308, the remote controller 213 determines the nearest candidate place to be a target position using the vehicle location information and the map MP. In step S309, the remote controller 213 generates a running control signal as follows. If the candidate place is present at the end of ascending of the road RD the vehicle 100 is climbing, the remote controller 213 generates a running control signal for reversing a traveling direction of the vehicle 100, then setting the shift position of the vehicle 100 to the R range, and moving the vehicle 100 backward. If the candidate place is present at the end of descending of the road RD the vehicle 100 is climbing, the remote controller 213 generates a running control signal for setting the shift position of the vehicle 100 to the N range and moving the vehicle 100 backward. In step S310, the remote controller 213 transmits the generated running control signal to the vehicle 100. In step S311, the vehicle controller 115 of the vehicle 100 controls the actuator group 120 using the running control signal transmitted from the server 200. By doing so, the vehicle controller 115 moves the vehicle 100 backward in conformity with the shift position, an acceleration, and a rudder angle included in the running control signal.

According to the above third embodiment, if it is determined that the vehicle 100 under the schedule of moving forward is required to climb the road RD having a gradient equal to or greater than the first threshold and if the remaining amount of the drive power source of the vehicle 100 is less than the second threshold, the control system 50 is capable of performing the following. The control system 50 is capable of stopping the vehicle 100 by moving the vehicle 100 backward and moving the vehicle 100 to an arbitrary place before the vehicle 100 becomes immovable.

According to the above third embodiment, if an arbitrary place where the vehicle 100 is stoppable is present at the end of ascending of the road RD the vehicle 100 is climbing, it is possible to perform the following. The control system 50 reverses a traveling direction of the vehicle 100 and then moves the vehicle 100 backward, thereby allowing the vehicle 100 to ascend the road RD the vehicle 100 is climbing even if the remaining amount of the drive power source of the vehicle 100 is poor. By doing so, the control system 50 moves the vehicle 100 to the arbitrary place present at the end of ascending of the road RD the vehicle 100 is climbing, thereby allowing the vehicle 100 to stop.

According to the above third embodiment, if an arbitrary place where the vehicle 100 is stoppable is present at the end of descending of the road RD the vehicle 100 is climbing, it is possible to perform the following. The control system 50 moves the vehicle 100 backward using the weight of the vehicle 100 and the gradient of the road RD, thereby allowing the vehicle 100 to descend the road RD the vehicle 100 is climbing even if the remaining amount of the drive power source of the vehicle 100 is poor. By doing so, the control system 50 moves the vehicle 100 to the arbitrary place present at the end of descending of the road RD the vehicle 100 is climbing, thereby allowing the vehicle 100 to stop.

### D. Fourth Embodiment:

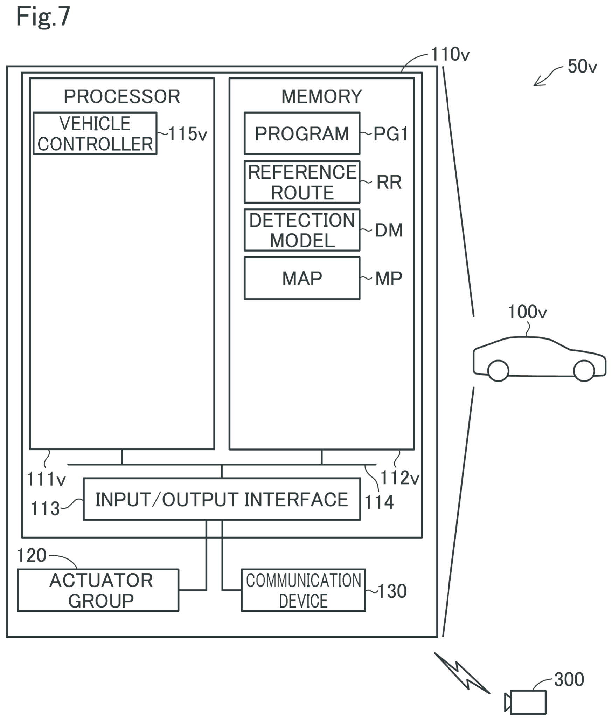

Fig. 7 is an explanatory view showing a schematic configuration of a control system 50v according to a fourth embodiment. In the present embodiment, the control system 50v differs from that of the first embodiment in that it does not include the server 200. A vehicle 100v of the present embodiment is capable of running by autonomous control from the vehicle 100v.

In the present embodiment, a processor 111v of a vehicle control device 110v executes the program PG1 stored in a memory 112v to function as a vehicle controller 115v. The vehicle controller 115v acquires output result from the sensor, generates a running control signal using the output result, and outputs the generated running control signal to operate the actuator group 120, thereby causing the vehicle 100v to run by autonomous control. In the present embodiment, in addition to the program PG1, the memory 112v contains a detection model DM and a reference route RR stored in advance therein. The vehicle controller 115v moves the vehicle 100v backward in the specific condition.

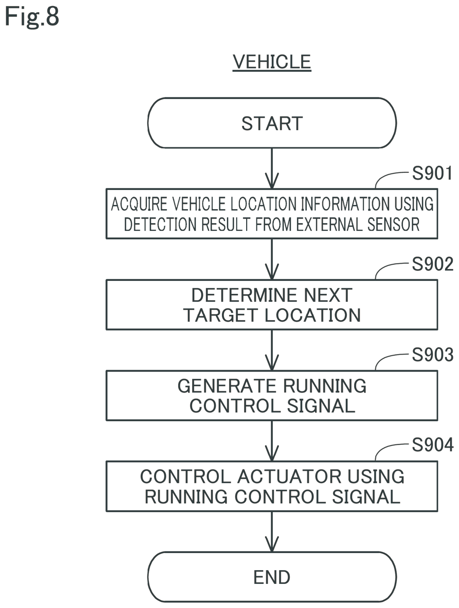

Fig. 8 is a flowchart showing a processing procedure of running control over the vehicle 100v according to the fourth embodiment.

In step S901, the processor 111v of the vehicle control device 110v acquires vehicle location information using detection result output from the camera as an external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator group 120 in a predetermined cycle. According to the control system 50v in the present embodiment, it is possible to cause the vehicle 100v to run by autonomous control without controlling the vehicle 100v remotely using the server 200.

According to the above fourth embodiment, in the specific condition that the vehicle 100v to run by unmanned driving is unable to move forward while the vehicle 100v is under a schedule of moving forward, the control system 50v is capable of moving the vehicle 100v to an arbitrary place by moving the vehicle 100v backward by autonomous control from the vehicle 100v.

### E. Other Embodiments:

(E1) As long as the control system 50, 50v has the function and configuration of moving the vehicle 100, 100v backward in the specific condition that is capable of running in the factory FC by unmanned driving, it does not necessarily required to have other functions or other configurations. As an example, the control system 50, 50v is not necessarily required to set a target position using the map MP and move the vehicle 100, 100v backward toward the set target position. Using a running path generated by placing running positions of the vehicle 100, 100v in chronological order, the control system 50, 50v may cause the vehicle 100, 100v to trace the running path in reverse chronological order, thereby moving the vehicle 100, 100v backward without setting a target position.

(E2) A case where the specific condition applies may also be a case where the vehicle 100, 100v moving forward is unable to stop while the vehicle 100, 100v is under a schedule of stopping. The schedule of stopping means a case where a running control signal for stopping the vehicle 100, 100v is generated or a case where a running control signal for stopping the vehicle 100, 100v is scheduled to be generated, for example. If it is impossible to set the shift position of the vehicle 100, 100v to the parking range or retain a brake hydraulic pressure for a certain period of time or longer, for example, it might become impossible to stop the vehicle 100, 100v. In response to this, if it is determined by using the state information that abnormality has occurred at the function of at least one of the parts of the control system 50, 50v under the schedule of stopping, the output unit 212 may output the specific information. In this configuration, the control system 50, 50v achieves the following by causing the vehicle 100, 100v moving forward to repeatedly perform the process of moving the vehicle 100, 100v backward temporarily and the process of moving the vehicle 100, 100v forward temporarily by the same distance as a running distance in a direction of the backward movement. The control system 50, 50v cancels the running distance of the vehicle 100, 100v in a direction of the forward movement and the running distance of the vehicle 100, 100v in the direction of the backward movement, thereby allowing the vehicle 100, 100v to stay on site. As a result, if the vehicle 100, 100v continues running and a different object is present at the end of the running, it is possible to avoid contact of the vehicle 100, 100v with the different object.

(E3) In each of the above-described embodiments, the external sensor 300 is not limited to the camera but may be the distance measuring device, for example. The distance measuring device is a light detection and ranging (LiDAR) device, for example. In this case, detection result output from the external sensor may be three-dimensional point cloud data representing the vehicle 100. The server 200 and the vehicle 100,100v may acquire the vehicle location information through template matching using the three-dimensional point cloud data as the detection result and reference point cloud data, for example.

(E4) In each of the above-described first to third embodiments, the server 200 performs the processing from acquisition of vehicle location information to generation of a running control signal. By contrast, the vehicle 100,100v may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. The internal sensors may include, for example, sensors that detect the motion state of the vehicle 100, sensors that detect the operating state of each part of the vehicle 100, and sensors that detect the environment around the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E5) In the above-described fourth embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(E6) In the above-described fourth embodiment, the vehicle 100v acquires vehicle location information using detection result from the external sensor 300. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 of the vehicle 100v using the generated running control signal. In this case, the vehicle 100v is capable of running without using any detection result from an external sensor 300. The vehicle 100v may acquire target arrival time or traffic congestion information from outside the vehicle 100v and reflect the target arrival time or traffic congestion information in at least one of the route and the running control signal. The functional configuration of the control system 50v may be entirely provided at the vehicle 100. Specifically, the processes realized by the control system 50v in the present disclosure may be realized by the vehicle 100v alone.

(E7) In the above-described first to third embodiments, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(E8) In each of the above-described embodiments, the vehicle 100,100v is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the vehicle 100,100v may include at least the vehicle control device 110, 110v and the actuator group 120. In order for the vehicle 100,100v to acquire information from outside for unmanned driving, the vehicle 100,100v is simply required to include the communication device 130 further. Specifically, the vehicle 100,100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100,100v before the vehicle 100,100v is shipped from a factory, or a remaining component such as a bodyshell may be mounted on the vehicle 100,100v after the vehicle 100,100v is shipped from the factory FC while the remaining component such as a bodyshell is not mounted on the vehicle 100,100v. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100,100v in each embodiment.

(E9) The vehicle 100,100v may be manufactured by combining a plurality of modules. The module means a unit composed of one or more components grouped according to a configuration or function of the vehicle 100,100v. For example, a platform of the vehicle 100,100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100,100v different from the platform may be modularized. Various modules may include an arbitrary exterior component such as a bumper or a grill, or an arbitrary interior component such as a seat or a console. Not only the vehicle 100,100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E10) A configuration for realizing running of the vehicle 100,100v by unmanned driving is also called a "Remote Control auto Driving system". Conveying the vehicle 100,100v using Remote Control Auto Driving system is also called "self-running conveyance". Producing the vehicle 100,100v using self-running conveyance is also called "self-running production". In self-running production, for example, at least part of the conveyance of the vehicle 100,100v is realized by self-running conveyance in the factory FC where the vehicle 100,100v is manufactured.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together, as appropriate, in order to solve part or the whole of the problems described previously or to achieve part or the whole of the effects described previously. When the technical features are not described as essential features in the present specification, they are able to be deleted, as appropriate.

## Claims

1. A control system (50;50v) that controls a moving object (100;100v) movable in a factory by unmanned driving, comprising:
a controller (213;115v) that moves the moving object (100:100v) backward by the unmanned driving in a specific condition corresponding to at least one of a case where the moving object (100;100v) is unable to move forward while the moving object (100;100v) is under a schedule of moving forward and a case where the moving object (100;100v) moving forward is unable to stop while the moving object (100;100v) is under a schedule of stopping; and
a memory (202;112v) storing a program to be executed by the controller (213;115v).

2. The control system (50) according to claim 1, further comprising:
an acquisition unit (211) that acquires state information indicating a state of the control system (211); and
an output unit (212), if it is determined by using the state information that abnormality has occurred at the function of the control system (50) under at least one of the schedule of moving forward and the schedule of stopping, the output unit outputting specific information to the controller (213), the specific information indicating that the specific condition applies, wherein
the controller (213) moves the moving object (100) backward by the unmanned driving if the specific information is acquired.

3. The control system (50) according to claim 1, further comprising:
an acquisition unit (211) that acquires environmental information indicating an environment around the moving object (100); and
an output unit (212), if it is determined by using the environmental information that an obstacle is present at a destination of forward movement of the moving object (100) under the schedule of moving forward, the output unit (212) outputting specific information to the controller (213), the specific information indicating that the specific condition applies, wherein
the controller (213) moves the moving object (100) backward by the unmanned driving if the specific information is acquired.

4. The control system (50) according to claim 3, wherein
the acquisition unit (211) further acquires road information about a road on which the moving object (100) is to move, the road information including at least one of the number of vehicular lanes formed on the road, the width of the vehicular lane, the shape of the road, the gradient of the road, and a frictional force between a drive wheel of the moving object (100) and a road surface of the road, and
if it is determined by further using the road information that the moving object (100) is unable to make at least one of direction change, route change, and stop, the output unit outputs the specific information to the controller (213).

5. The control system (50) according to claim 1, further comprising:
an acquisition unit (211) that acquires road information and remaining amount information, the road information being information about a road on which the moving object (100) is to move and including the gradient of the road, the remaining amount information indicating the remaining amount of a drive power source of the moving object (100); and
an output unit (212), if it is determined by using the road information that the moving object (100) is required to climb the road having the gradient equal to or greater than a predetermined first threshold under the schedule of moving forward and if the remaining amount specified by using the remaining amount information is less than a predetermined second threshold, the output unit (212) outputting specific information to the controller (213), the specific information indicating that the specific condition applies, wherein
the controller (213) moves the moving object (100) backward by the unmanned driving if the specific information is acquired.
